# EUROPÄISCHE PATENTSCHRIFT

(11) **EP 3 292 587 B1**
(45) Veröffentlichungstag und Bekanntmachung des Hinweises auf die Patenterteilung: **27.05.2020**
(21) Anmeldenummer: 16719388.7
(22) Anmeldetag: 27.04.2016
(51) Int. Cl.: H01M 10/0525, H01M 10/054, H01M 10/0563, H01M 10/0569

(54) **ELEKTROLYT FÜR EINE ALKALI-SCHWEFEL-BATTERIE, ALKALI-SCHWEFEL-BATTERIE ENTHALTEND DEN ELEKTROLYTEN UND VERWENDUNGEN IHRER BESTANDTEILE**
ELECTROLYTE FOR AN ALKALI METAL/SULFUR BATTERY, ALKALI METAL/SULFUR BATTERY COMPRISING THE ELECTROLYTE, AND USE OF ITS CONSTITUENTS
ÉLECTROLYTE POUR UNE BATTERIE DE MÉTAL/SOUFRE D'ALCALI, UNE BATTERIE DE MÉTAL/SOUFRE D'ALCALI COMPRENANT L'ÉLECTROLYTE ET L'UTILISATION DE SES ÉLÉMENTS

(30) Priorität: 04.05.2015 DE 102015208197
(43) Veröffentlichungstag der Anmeldung: 14.03.2018
(73) Patentinhaber: Fraunhofer Gesellschaft zur Förderung der angewandten Forschung E.V., 80686 München (DE)
(72) Erfinder: THIEME, Sören, 01324 Dresden (DE); ALTHUES, Holger, 01309 Dresden (DE); KASKEL, Stefan, 01159 Dresden (DE); KOHL, Michael, Oxford OX4 2FW (GB)
(74) Vertreter: Pfenning, Meinig & Partner mbB
(86) Internationale Anmeldenummer: PCT/EP2016/059397
(87) Internationale Veröffentlichungsnummer: WO 2016/177614

(56) Entgegenhaltungen:
- WO-A1-2014/041110
- US-A1- 2004 009 397
- US-A1- 2014 017 559
- US-A1- 2014 170 459

## Beschreibung

Erfindungsgemäß wird ein Elektrolyt für eine Alkali-Schwefel-Batterie bereitgestellt. Zudem wird eine Alkali-Schwefel-Batterie vorgestellt, die den erfindungsgemäßen Elektrolyten enthält. Der erfindungsgemäße Elektrolyt enthält eine Mischung aus einem Sulfon und einem fluorhaltigen Ether in einem Volumenverhältnis von ≥ 1:4 (v:v). Durch die Verwendung dieses Elektrolyten konnte auch ohne Einsatz von LiNO₃ das Shuttling von Polysulfidspezies von der Kathode zur Anode effektiv unterdrückt werden. Auch ohne die Verwendung von LiNO₃ wird durch den Elektrolyten in Alkali-Schwefel-Batterien eine hohe Coulomb-Effizienz, Langzeitstabilität (geringe Selbstentladung) und Zyklenfestigkeit erreicht. Coulomb-Effizienz, Langzeitstabilität und Zyklenfestigkeit konnten durch die Verwendung einer Kathode, die ein Additiv zur homogenisierten Verteilung von Polysulfid innerhalb der Kathode enthält, weiter verbessert werden. Zudem werden Verwendungen von Bestandteilen der erfindungsgemäßen Alkali-Schwefel-Batterie vorgeschlagen.

In Lithium-Schwefel-Batterien kommt es zur Bildung von sogenannten Lithium-Polysulfiden (Li₂Sₙ, 2 ≤ n ≤ 8). Einige dieser Polysulfidspezies sind in den gebräuchlichen Elektrolyten (z. B. ein Gemisch aus DME:DOL mit einem Leitsalz) löslich. Die gelösten Polysulfide können den Separator durchdringen und werden an der Anode zu niederen Polysulfidspezies reduziert. Während des Ladevorgangs folgt der Reduktion eine Reoxidation an der Kathode, wodurch ein Kreislaufprozess entsteht, der die Coulomb-Effizienz des Akkumulators erheblich verringert. Wird die Batterie im geladenen Zustand gelagert, kann es ebenfalls zur Bildung von löslichen Polysulfiden kommen, die an der Anode reduziert werden. Dadurch verringert sich die Kapazität der Zelle. Weiterhin verringert sich die Zyklenfestigkeit durch mit diesen Vorgängen verbundene, irreversible Prozesse.

Im Stand der Technik ist bekannt, dass der Zusatz von N-O-haltigen Verbindungen (wie z. B. LiNO₃) zu einer wesentlich verbesserten Coulomb-Effizienz und Zyklenfestigkeit führt. Dieser Mechanismus setzt an der Lithium-Anode an. Es wird angenommen, dass es durch die Nitratverbindungen zur Bildung von sulfitischen Spezies an der Oberfläche der Lithium-Anode kommt.

Der Zusatz von LiNO₃ oder anderen N-O-haltigen Verbindungen löst das Problem jedoch nicht umfassend. Erstens kann durch die Gegenwart von LiNO₃ die Degradation der Anode nicht vollständig verhindert werden. Zudem lässt die Schutzwirkung auf Anodenseite kontinuierlich nach, da fortwährende Reparaturprozesse am Oberflächenfilm der Anode LiNO₃ sowie Aktivmaterial in Form von Polysulfidspezies verbrauchen. Folglich wirkt sich dies negativ auf die Zyklenfestigkeit der Zelle aus. Darüberhinaus beeinflusst LiNO₃ die Chemie der Zelle durch Nebenreaktionen negativ. Es besteht somit im Stand der Technik der Bedarf an Lösungen, die ohne die Verwendung von LiNO₃ auskommen.

Polyethylenoxid-basierte Polymerelektrolyte wurden bereits erfolgreich als Kathodenzusatz oder als Membran in Lithium-Schwefel-Batterien eingesetzt, können aber für sich genommen den Polysulfid-Shuttle nicht vollständig unterdrücken.

Fluorhaltige Ether (insbesondere TTE oder HFE) wurden in der Vergangenheit als Elektrolytzusatz verwendet, wobei sich diese durch eine geringe Löslichkeit für Polysulfide auszeichnen. Eine vollständige Unterdrückung des Polysulfid-Shuttles konnte jedoch auch mit fluorhaltigen Ethern als Elektrolytzusatz nicht erreicht werden. Als Verbesserungsversuch wurde LiNO₃ dem Elektrolyt zugegeben, was jedoch zu einem Auftreten hoher Überpotentiale geführt hat, die für eine kinetische Hemmung der Polysulfid-Umwandlung sprechen. Ein weiterer Nachteil ist, dass nur eine geringe Ausnutzung des Aktivmaterials (< 70 %) möglich ist.

Ausgehend hiervon war es die Aufgabe der vorliegenden Erfindung einen Elektrolyt für eine Alkali-Schwefel-Batterie bereitzustellen, der auch ohne Einsatz von LiNO₃ eine verbesserte Unterdrückung des Polysulfid-Shuttles bewirkt und somit eine hohe Coulomb-Effizienz, Langzeitstabilität (geringe Selbstentladung) und Zyklenfestigkeit in Alkali-Schwefel-Batterien garantiert.

Die Aufgabe wird gelöst durch den Elektrolyt gemäß Anspruch 1, die Alkali-Schwefel-Batterie gemäß Anspruch 8 die Verwendungen gemäß Anspruch 19 und 20. Die abhängigen Ansprüche stellen bevorzugte Ausgestaltungsformen der Erfindung dar.

Erfindungsgemäß wird ein Elektrolyt für eine Alkali-Schwefel-Batterie bereitgestellt, wobei der Elektrolyt ein Sulfon und einen fluorhaltigen Ether enthält oder daraus besteht und dadurch gekennzeichnet ist, dass das Volumenverhältnis von dem Sulfon zu dem fluorhaltigen Ether ≥ 1:4 (v:v) beträgt. Der erfindungsgemäße Elektrolyt enthält ein Sulfon, was eine besonders hohe Oxidationsstabilität bewirkt. Zudem weist der Elektrolyt eine erhöhte Sicherheit gegenüber Entflammung auf und erlaubt somit den Einsatz in Alkali-Schwefel-Batterien über einen breiten Temperaturbereich. Darüberhinaus bewirkt der Elektrolyt eine hohe Coulomb-Effizienz, Langzeitstabilität (geringe Selbstentladung) und Zyklenfestigkeit in Alkali-Schwefel-Batterien.

In dem erfindungsgemäßen Elektrolyt beträgt das Volumenverhältnis von dem Sulfon zu dem fluorhaltigen Ether bevorzugt ≥ 1:3 (v:v), besonders bevorzugt 1:3 (v:v) bis 1:1 (v:v).

Der Elektrolyt kann flüssig, gelförmig oder fest sein, bevorzugt flüssig oder gelförmig, besonders bevorzugt flüssig. Die angegebenen Aggregatszustände beziehen sich auf Raumtemperatur (25 °C).

Der fluorhaltige Ether kann ausgewählt sein aus der Gruppe bestehend aus 2,2,2-Trifluorethylmethylether, 2,2,2-Trifluorethyldifluormethylether, 2,2,3,3,3-Pentafluorpropylmethylether, 2,2,3,3,3-Pentafluorpropyldifluormethylether, 2,2,3,3,3-Pentafluorpropyl-1,1,2,2-tetrafluorethylether, 1,1,2,2-Tetrafluorethylmethylether, 1,1,2,2-Tetrafluorethylethylether, 1,1,2,2-Tetrafluorethylpropylether, 1,1,2,2-Tetrafluorethylbutylether, 1,1,2,2-Tetrafluorethylisobutylether, 1,1,2,2-Tetrafluorethylisopentylether, 1,1,2,2-Tetrafluorethyl-2,2,2-trifluoroethylether, 1,1,2,2-Tetrafluorethyl-2,2,3,3-tetrafluorpropylether, Hexafluorisopropylmethylether, 1,1,3,3,3-Pentafluor-2-trifluormethylpropylmethylether, 1,1,2,3,3,3-Hexafluorpropylmethylether, 1,1,2,3,3,3-Hexafluorpropylethylether, und 2,2,3,4,4,4-Hexafluorbutyldifluormethylether, bevorzugt 1,1,2,2-Tetrafluorethylpropylether, besonders bevorzugt 1,1,2,2-Tetrafluorethyl-2,2,3,3-tetrafluorpropylether.

Das Sulfon kann ausgewählt sein aus der Gruppe bestehend aus nichtzyklischen aliphatischen Sulfonen (bevorzugt Ethylmethylsulfon, Ethylvinylsulfon und/oder Butylsulfon) und zyklischen aliphatischen Sulfonen (bevorzugt Tetramethylensulfon). Das erfindungsgemäße Sulfon ist ein nichtfluoriertes Sulfon. Nicht-fluorhaltige Sulfone wie z.B. Sulfolan wirken sich sowohl positiv auf die Kathodenchemie als auch auf die Anodenoberfläche aus, da sie eine besonders hohe Oxidationsstabilität sowie gute Kompatibilität mit Lithium aufweisen.

Der Elektrolyt kann ein Salz enthalten, das ausgewählt ist aus der Gruppe bestehend aus LiPF₆, LiBF₄, LiCIO₄, LiSO₃CF₃, LiN(SO₂F)₂, LiN(SO₂CF₃)₂, LiN(SO₂F)(SO₂CF₃), LiN(SO₂F)(SO₂C₄F₉), LiN(SO₂CF₂CF₃)₂, LiC(SO₂CF₂CF₃)₃, LiC(SO₂CF₃)₃, Lil, LiCI, LiF, LiPF₅(SO₂CF₃), LiPF₄(SO₂CF₃)₂, und Mischungen hiervon, bevorzugt LiN(SO₂CF₃)₂. Das Salz ist bevorzugt in einer Konzentration von > 0 mol/l bis ≤ 2,5 mol/l enthalten.

In einer weiteren bevorzugten Ausführungsform enthält der Elektrolyt kein LiNO₃.

Ferner wird erfindungsgemäß eine Alkali-Schwefel-Batterie bereitgestellt, enthaltend
a) einen erfindungsgemäßen Elektrolyt;
b) eine Kathode, die
   i) Kohlenstoff;
   ii) ein Schwefel-haltiges Kathoden-Aktivmaterial, das ausgewählt ist aus der Gruppe bestehend aus elementarer Schwefel, anorganische Schwefelverbindung (optional oligomer oder polymer), organische Schwefelverbindung (optional oligomer oder polymer), Alkalimetallsulfid (bevorzugt Lithiumsulfid oder Natriumsulfid), Alkalimetalloligosulfid (bevorzugt Lithiumoligosulfid oder Natriumoligosulfid), Alkalimetallpolysulfid (bevorzugt Lithiumpolysulfid oder Natriumpolysulfid); und
   iii) optional ein Additiv zur homogenisierten Verteilung von Polysulfid innerhalb der Kathode;
   enthält oder daraus besteht;
c) eine Anode, die ein Anoden-Aktivmaterial enthält oder daraus besteht, das ausgewählt ist aus der Gruppe bestehend aus Alkalimetall, Alkalimetall-Kohlenstoff-Interkalat, Metallpulver, eine Verbindung, die zur reversiblen Oxidation und Reduktion mit einem Alkalimetallion geeignet ist, und Mischungen oder Legierungen hiervon (z.B. eine Legierung mit Si und/oder Sn), bevorzugt Lithium, Natrium, Lithium-Graphit-Interkalat, Natrium-Graphit-Interkalat, und Mischungen oder Legierungen hiervon;
d) einen Separator;
oder bestehend daraus.

Die erfindungsgemäße Alkali-Schwefel-Batterie zeichnet sich durch eine hohe Coulomb-Effizienz, Langzeitstabilität (geringe Selbstentladung) und Zyklenfestigkeit aus.

Die Alkali-Schwefel-Batterie kann dadurch gekennzeichnet sein, dass die Kathode 40 bis 80 Gew.-%, bevorzugt 50 bis 70 Gew.-%, besonders bevorzugt 55 bis 65 Gew.-%, Schwefel, in Bezug auf das Gesamtgewicht der Kathode, enthält. Ferner kann die Kathode 20 bis 50 Gew.-%, bevorzugt 25 bis 45 Gew.-%, besonders bevorzugt 30 bis 40 Gew.-%, Kohlenstoff, in Bezug auf das Gesamtgewicht der Kathode, enthalten.

Zudem kann die Kathode 1 bis 30 Gew.-%, bevorzugt 2 bis 20 Gew.-%, besonders bevorzugt 2,5 bis 15 Gew.-%, Additiv zur homogenisierten Verteilung von Polysulfid innerhalb der Kathode, in Bezug auf das Gesamtgewicht der Kathode, enthalten. Aufgrund der geringen Löslichkeit von Polysulfiden im erfindungsgemäßen Elektrolyt ist deren Reaktionsfähigkeit in der Kathode generell niedrig. Das Additiv erhöht lokal in der Kathode die Löslichkeit und Verteilung von Polysulfiden und Alkalisulfiden (z.B. Li₂S) und stellt somit eine hohe Reaktionsfähigkeit von Polysulfiden und die Reversibilität ihrer Umwandlung während des Batteriebetriebs sicher. Es ist vorteilhaft, wenn das Additiv nur in der Kathode der Alkali-Schwefel-Batterie, d.h. nicht im Separator und Elektrolyt, enthalten ist. Wäre das Additiv z.B. auch im Separator vorhanden oder homogen im Elektrolyt verteilt, würde das Polysulfidshuttling begünstigt werden und die Coulombeffizienz würde sich verschlechtern. Eine lokale Begrenzung des Additivs auf die Kathode kann beispielsweise erreicht werden, indem das Additiv als Gel vorliegt oder chemisch kovalent an der Kathode angebunden wird.

Das Additiv zur homogenisierten Verteilung von Polysulfid kann einen Redox-Mediator für Alkali-Polysulfid, bevorzugt einen Redox-Mediator für Lithium-Polysulfid, besonders bevorzugt ein Metalloxid als Redox-Mediator für Lithium-Polysulfid, insbesondere Manganoxid, Aluminiumoxid und/oder Titanoxid, enthalten oder daraus bestehen.

Ferner kann das Additiv zur homogenisierten Verteilung von Polysulfid ein Polymer enthalten oder daraus bestehen, das Sauerstoffatome, Stickstoffatome und/oder Halogenatome enthält, bevorzugt ein Polymer, das die Etherfunktionalität -(CH₂-CH₂-O-)ₙ mit n ≥ 1 enthält, besonders bevorzugt Polyethylenoxid. Dieses Polymer (z.B. PEO) bewirkt, dass (kurzkettige) Polysulfidspezies *in situ* auf der Kathodenseite in Lösung gebracht werden bzw. gehalten werden und somit eine lokal erhöhte Stabilisierung und Umsetzung dieser Polysulfidspezies stattfindet, ohne dass diese von der Kathodenseite zur Anodenseite gelangen können. Es wird daher eine gute Kinetik für die Umsetzung von Aktivmaterial erreicht, wobei der Shuttle-Mechanismus auch ohne Einsatz von LiNO₃ effektiv unterdrückt wird. Die Anode wird daher nicht von Polysulfidspezies, sondern lediglich von dem (z.B. flüssigen) Elektrolyt kontaktiert, dessen Zersetzungsprodukte einen stabilen, unlöslichen Oberflächenfilm bilden. Es wurde darüberhinaus beobachtet, dass durch das Polymer eine deutlich höhere Aktivmaterialausnutzung von nahezu 90 % möglich ist (ohne das Polymer nur ca. 70 %) und ein überraschend langes Entladeplateau zwischen 1,8-2,0 V auftritt.

Bevorzugt enthält die Kathode ein Gel oder besteht daraus. Der Gelzustand der Kathode kann beispielsweise dadurch vorliegen, indem die Kathode eine bestimmte Konzentration an dem oben genannten Polymer (z.B. PEO) enthält. Unlösliche Kathodenbestandteile (z.B. Kohlenstoff und/oder Schwefel) sind bevorzugt durch das oben genannte Polymer benetzt.

Die Kathode kann einen Binder enthalten, wobei der Binder bevorzugt ausgewählt ist aus der Gruppe bestehend aus Styrol-Butadien-Kautschuk, Polytetrafluorethylen, Gelatine, Polyacrylsäure, Carboxymethylcellulose, Polyvinylpyrrolidon und Polyvinylidenfluorid, besonders bevorzugt Styrol-Butadien-Kautschuk und Polytetrafluorethylen. Der Binder kann in einer Konzentration von 1 bis 10 Gew.-%, bevorzugt 1,5 bis 8 Gew.-%, besonders bevorzugt 2 bis 6 Gew.-%, in Bezug auf das Gesamtgewicht der Kathode, enthalten sein.

Bevorzugt enthält die Kathode amorphen Kohlenstoff, Kohlenstoffnanoröhren und/oder Kohlenstoffnanofasern, wobei der amorphe Kohlenstoff besonders bevorzugt Ruß ist. Ferner kann die Kathode amorphen Kohlenstoff und Kohlenstoffnanofasern enthalten, wobei das Gewichtsverhältnis von amorphen Kohlenstoff zu Kohlenstoffnanofasern bevorzugt von 5:1 (w:w) bis 20:1 (w:w), bevorzugt von 8:1 (w:w) bis 16:1 (w:w), besonders bevorzugt von 10:1 (w:w) bis 12:1 (w:w), beträgt.

Der amorphe Kohlenstoff weist bevorzugt Poren auf, besonders bevorzugt Mikroporen und Mesoporen, insbesondere Mikroporen mit einem Durchmesser von > 0 bis 2 nm und Mesoporen mit einem Durchmesser von 2 bis 50 nm.

In einer bevorzugten Ausführungsform ist das Schwefel-haltige Kathoden-Aktivmaterial homogen in dem Kohlenstoff der Kathode verteilt. Bevorzugt liegt das Schwefel-haltige Kathoden-Aktivmaterial in Poren des Kohlenstoffs vor, besonders bevorzugt in Poren des amorphen Kohlenstoffs, wobei das Kathoden-Aktivmaterial insbesondere in den Poren eingeschmolzen vorliegt.

In einer bevorzugten Ausführungsform enthält die Kathode einen anorganischen Feststoff, bei dem es sich nicht um Schwefel handelt, bevorzugt einen Redox-Mediator für Alkali-Polysulfid, besonders einen Redox-Mediator für Lithium-Polysulfid, insbesondere Mangandioxid, Aluminiumoxid und/oder Titanoxid (optional in sog. Nano-Sheets).

Der Separator kann Polypropylen enthalten oder daraus bestehen.

Es wird die Verwendung einer Zusammensetzung enthaltend oder bestehend aus einem fluorhaltigen Ether und einem Sulfon, bevorzugt 1,1,2,2-Tetrafluorethyl-2,2,3,3-Tetrafluorpropylether und Tetramethylensulfon (Sulfolan), als Elektrolyt in Alkali-Schwefel-Batterien, bevorzugt Lithium-Schwefel-Batterien, vorgeschlagen.

Ferner wird die Verwendung einer Zusammensetzung enthaltend oder bestehend aus Polyethylenoxid, bevorzugt Polyethylenoxid und Styrol-Butadien-Kautschuk, besonders bevorzugt Polyethylenoxid, Styrol-Butadien-Kautschuk und Polyvinylpyrrolidon, als Binder für Kathoden in Alkali-Schwefel-Batterien, bevorzugt Lithium-Schwefel-Batterien, vorgeschlagen.

Anhang der nachfolgenden Figuren und Beispiele soll der erfindungsgemäße Gegenstand näher erläutert werden ohne diesen auf die hier dargestellten spezifischen Ausführungsformen einschränken zu wollen.

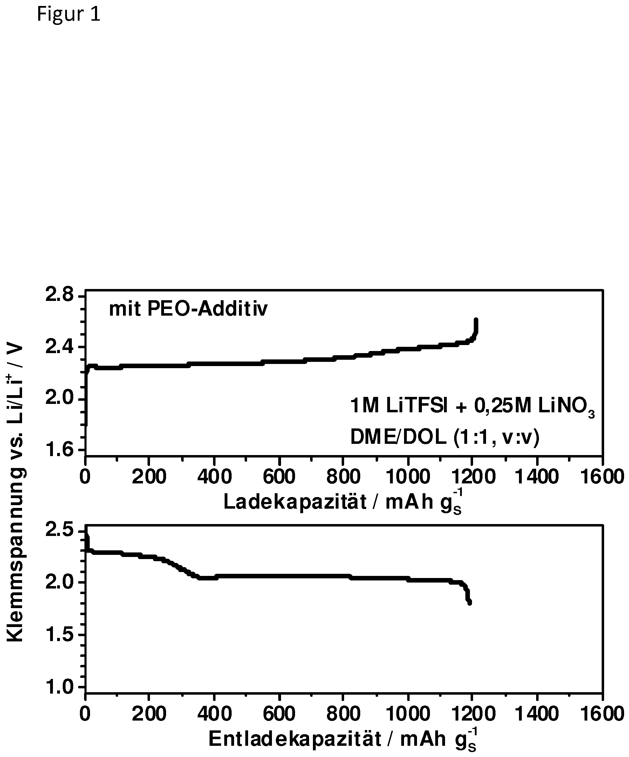

Figur 1 zeigt eine galvanostatische Messung der Ladekapazität und Entladekapazität einer Lithium-Schwefel-Batterie mit PEO als (Kathoden-)Additiv, die mit einem Elektrolyten enthaltend DME und DOL (1:1, v:v) sowie LiNO₃ betrieben wurde. Die Zyklierung (Ladung/Entladung) erfolgte mit einer Rate von C/10 zwischen 1,8-2,6 V vs. Li/Li⁺.

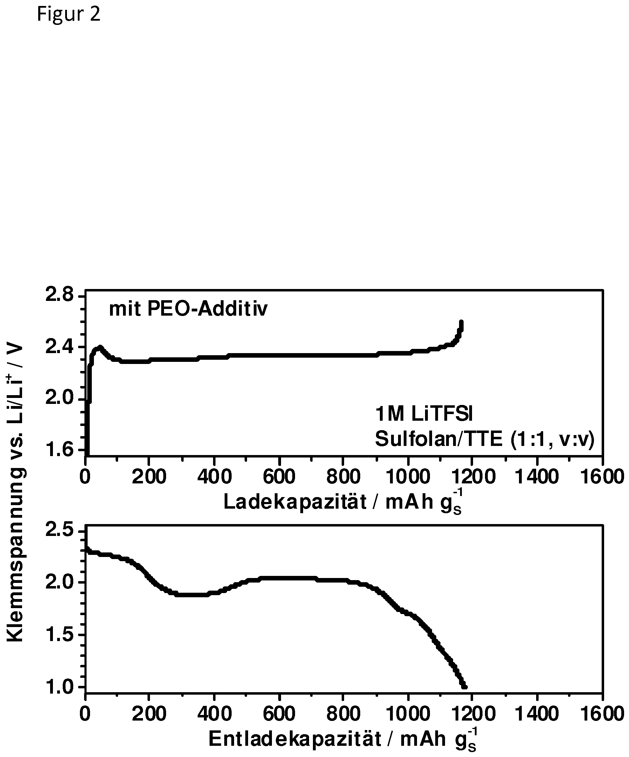

Figur 2 zeigt eine galvanostatische Messung der Ladekapazität und Entladekapazität einer Lithium-Schwefel-Batterie mit PEO als (Kathoden-)Additiv, die mit einem Elektrolyten enthaltend Sulfolan und TTE (1:1, v:v) betrieben wurde. Nach einem Formierungszyklus zwischen 1,0-2,6 V vs. Li/Li⁺ erfolgte die Zyklierung (Ladung/Entladung) zwischen 1,5-2,6 V vs. Li/Li⁺. Die Rate betrug jeweils C/10.

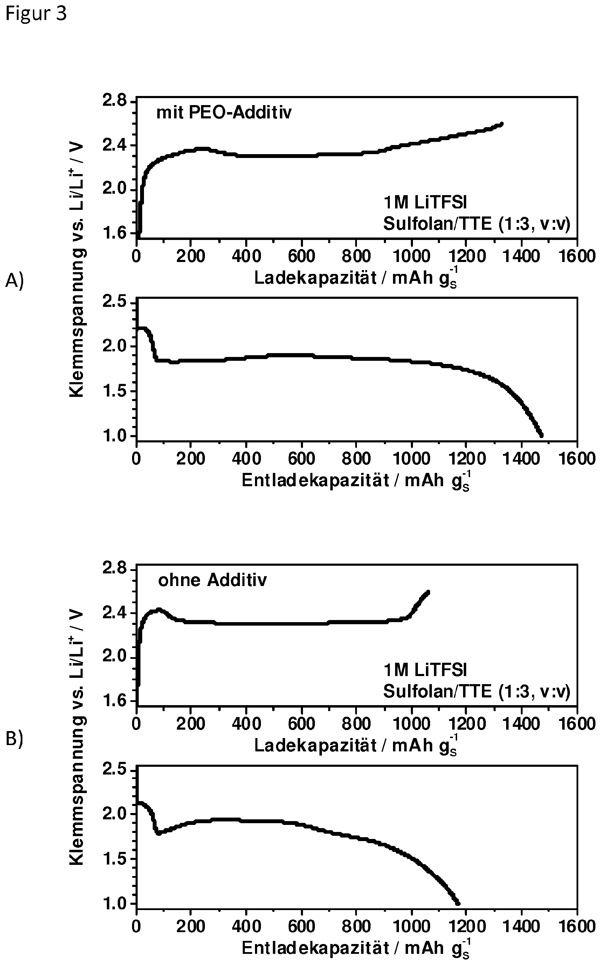

Figur 3A und 3B zeigen jeweils eine galvanostatische Messung der Ladekapazität und Entladekapazität einer Lithium-Schwefel-Batterie, die mit einem Elektrolyten enthaltend Sulfolan und TTE (1:3, v:v) betrieben wurde. Nach einem Formierungszyklus zwischen 1,0-2,6 V vs. Li/Li⁺ erfolgte die Zyklierung (Ladung/Entladung) zwischen 1,5-2,6 V vs. Li/Li⁺. Die Rate betrug jeweils C/10. In Figur 3A ist das Ergebnis dargestellt, dass bei der Verwendung mit PEO als Additiv in der Kathode erhalten wurde, wogegen Figur 3B das Ergebnis darstellt, dass bei der Verwendung einer Kathode ohne Additiv erhalten wurde.

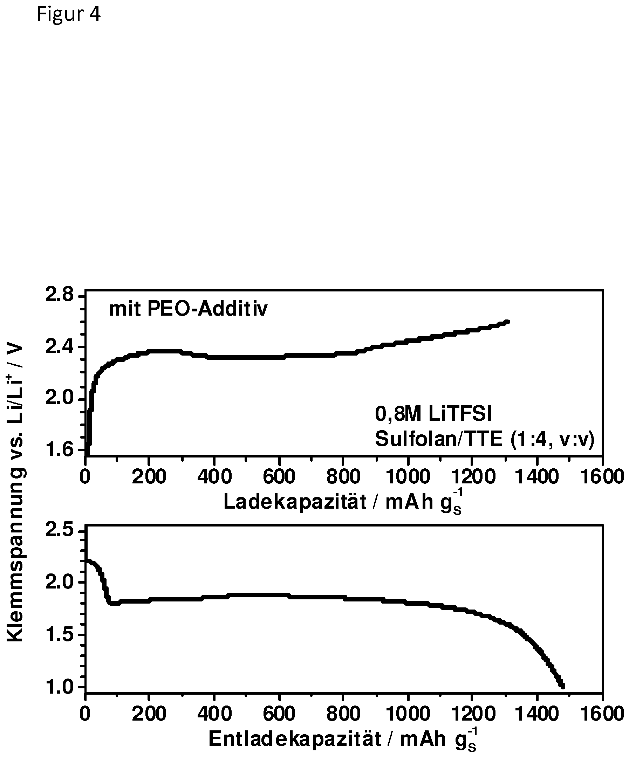

Figur 4 zeigt eine galvanostatische Messung der Ladekapazität und Entladekapazität einer Lithium-Schwefel-Batterie mit PEO als (Kathoden-)Additiv, die mit einem Elektrolyten enthaltend Sulfolan und TTE (1:4, v:v) betrieben wurde. Nach einem Formierungszyklus zwischen 1,0-2,6 V vs. Li/Li⁺ erfolgte die Zyklierung (Ladung/Entladung) zwischen 1,5-2,6 V vs. Li/Li⁺. Die Rate betrug jeweils C/10.

### Beispiel 1 - Herstellung einer erfindungsgemäßen Alkali-Schwefel-Batterie

Eine erfindungsgemäße Alkali-Schwefel-Batterie kann durch ein Verfahren hergestellt werden, dass folgende Schritte umfasst
a) Verschmelzen von Schwefel und amorphen Kohlenstoff zu einem ersten Komposit;
b) Vermahlen des ersten Komposits mit Kohlenstoffnanoröhren zu einem zweiten Komposit;
c) Anmischen eines Schlickers aus dem zweitem Komposit, Binder und Wasser;
d) Vermahlen des Schlickers;
e) Rakeln des vermahlenen Schlickers zu Schichten;
f) Trocknen der Schichten,
g) Kalandrieren der Schichten (Vorteil: kompaktere und glattere Schicht mit hoher Dichte und guter elektronischer und mechanischer Anbindung);
h) Anordnen der kalandrierten Schichten auf einer ersten Seite eines Separators;
i) Anordnen einer Anode, die ein Alkalimetall enthält oder daraus besteht, auf einer zweiten Seite des Separators; und
j) Zugabe eines Elektrolyts, der einen fluorhaltigen Ether und ein Sulfon enthält oder daraus besteht.

In dem Verfahren kann Schritt a) bei einer Temperatur von 100 bis 200 °C, bevorzugt 130 bis 170 °C, für 10 Minuten bis 60 Minutenbevorzugt 20 Minuten bis 40 Minuten, durchgeführt werden. In Schritt b) und/oder Schritt d) wird bevorzugt in einer Schwingmühle vermahlen. In Schritt f) kann zunächst bei 20 bis 30 °C getrocknet und anschließend die Schichten bei 80 °C für 1 bis 2 Stunden erhitzt werden.

### Beispiel 2 - Herstellung einer PEO-Additiv enthaltenden Kathode und einer Lithium-Schwefel-Batterie mit dieser Kathode und einem Referenzelektrolyten

Für die Herstellung der Kathode wird zunächst ein KB/S-Komposit (8:15, m:m) durch Verschmelzen von Ruß (Ketjenblack EC600-JD = KB) und Schwefel (S) im Trockenschrank bei 155 °C für 12h hergestellt.

Anschließend erfolgt ein Anmischen eines Schlickers (Slurry) aus
- 1,84 g KB/S (Gesamtgehalt: 92 Gew.-%);
- 0,06 g Carbon Nanofibers (CNF) (Gesamtgehalt: 3 Gew.-%); und
- 0,1 g eines Gemisches aus Polyethylenoxid (PEO) Additiv, Polyvinylpyrollidon (PVP) und Styrol-Butadien-Kautschuk (SBR) (PEO:PVP:SBR = 2,8:0,7:1,5; m:m:m) als Binder (Gesamtbindergehalt: 5 Gew.-%).

Der Binder wurde hierbei als 4%-ige (Gew.-%) Lösung in H₂O eingesetzt, nachdem KB/S-Komposit + CNFs bei 25 Hz für 10 min in einer Schwingmühle (Retsch MM400) vermahlen wurde. Weiterhin wurden dem Schlicker noch 5 ml H₂O zugesetzt. Anschließend folgte ein zweiter Mahlvorgang bei 25 Hz für 30 min.

Es wird eine Schicht gerakelt, die über Nacht bei Raumtemperatur und anschließend bei 80 °C für 1,5 h an der Luft getrocknet wird und anschließend kalandriert. Die Schwefelbeladung der Schicht (Aktivschicht) betrug ca. 1,4 mg Schwefel / cm² und ihre Dichte ca. 0,7 g/cm³ und kann als Kathode in Alkali-Schwefel-Batterien verwendet werden.

Die durch das oben genannte Verfahren erhaltene Kathode wurde anschließend in einer Knopfzelle (CR2016) verbaut. Die Bestandteile waren:
- 12 mm gerakelte Aktivschicht als Kathode (siehe oben);
- 1 Separator (Celgard 3500, 19 mm Durchmesser);
- 250 µm Lithiumfolie als Anode (MTI corp., 15,6 mm Durchmesser);
- 2x 500 µm V2A-Stahlabstandhalter (15,4 mm Durchmesser).

In der Knopfzelle wurde ein Elektrolyt eingesetzt, der 1 M LiTFSI (Aldrich, 99,95 %) und 0,25 M LiNO₃ (Alfa Aesar, 99.98 %, wasserfrei) in
- 50 Vol.-% DME (Sigma Aldrich, 99,5 %, wasserfrei); und
- 50 Vol.-% DOL (Aldrich, 99,8 %, wasserfrei);
enthält (= Referenzelektrolyt). Das Elektrolyt-zu-Schwefel-Verhältnis betrug 8 µl-Elektrolyt/mg-Schwefel.

Die Zelle wurde anschließend galvanostatisch gemessen, wobei die Zyklierung (Ladung/Entladung) mit einer Rate von C/10 zwischen 1,8-2,6 V vs. Li/Li⁺ erfolgte. Das Ergebnis ist in Figur 1 dargestellt.

### Beispiel 3 - Lithium-Schwefel-Batterie mit PEO-Additiv enthaltender Kathode und erfindungsgemäßen Elektrolyten (Sulfolan:TTE = 1:1, v:v)

Es wurde die PEO-Additiv enthaltende Kathode aus Beispiel 2 in der gleichen Knopfzelle wie in Beispiel 2 verbaut.

In der Knopfzelle wurde jedoch ein Elektrolyt eingesetzt, der 1 M LiTFSI (Aldrich, 99,95 %) in
- 50 Vol.-% Sulfolan (Sigma Aldrich, 99 %); und
- 50 Vol.-% TTE (SynQuest Laboratories, Inc., 99 %);
enthält. Das Elektrolyt-zu-Schwefel-Verhältnis betrug 8 µl-Elektrolyt/mg-Schwefel.

Die Zelle wurde anschließend galvanostatisch gemessen, wobei die Zyklierung (Ladung/Entladung) mit einer Rate von C/10 zwischen 1,5-2,6 V vs. Li/Li⁺ erfolgte. Im 1. Zyklus erfolgte zur Formierung der Zelle die Entladung mit einer Rate von C/10 bis 1,0 V vs. Li/Li⁺. Das Ergebnis ist in Figur 2 dargestellt.

### Beispiel 4 - Lithium-Schwefel-Batterie mit PEO-Additiv enthaltender Kathode und weiterem erfindungsgemäßen Elektrolyten (Sulfolan:TTE = 1:3, v:v)

Es wurde die PEO-Additiv enthaltende Kathode aus Beispiel 2 in der gleichen Knopfzelle wie in Beispiel 2 verbaut.

Als Elektrolyt der Knopfzelle wurde jedoch ein Elektrolyt eingesetzt, der 1 M LiTFSI (Aldrich, 99,95 %) in
- 25 Vol.-% Sulfolan (Sigma Aldrich, 99 %); und
- 75 Vol.-% TTE (SynQuest Laboratories, Inc., 99 %);
enthält. Das Elektrolyt-zu-Schwefel-Verhältnis betrug 8 µl-Elektrolyt/mg-Schwefel.

Die Zelle wurde anschließend galvanostatisch gemessen, wobei die Zyklierung (Ladung/Entladung) mit einer Rate von C/10 zwischen 1,5-2,6 V vs. Li/Li⁺ erfolgte. Im 1. Zyklus erfolgte zur Formierung der Zelle die Entladung mit einer Rate von C/10 bis 1,0 V vs. Li/Li⁺. Das Ergebnis ist in Figur 3A dargestellt.

### Beispiel 5 - Lithium-Schwefel-Batterie mit PEO-Additiv enthaltender Kathode und weiterem erfindungsgemäßen Elektrolyten (Sulfolan:TTE = 1:4, v:v)

Es wurde die PEO-Additiv enthaltende Kathode aus Beispiel 2 in der gleichen Knopfzelle wie in Beispiel 2 verbaut.

Als Elektrolyt der Knopfzelle wurde jedoch ein Elektrolyt eingesetzt, der 0,8 M LiTFSI (Aldrich, 99,95 %) in
- 20 Vol.-% Sulfolan (Sigma Aldrich, 99 %); und
- 80 Vol.-% TTE (SynQuest Laboratories, Inc., 99 %);
enthält. Das Elektrolyt-zu-Schwefel-Verhältnis betrug 8 µl-Elektrolyt/mg-Schwefel.

Die Zelle wurde anschließend galvanostatisch gemessen, wobei die Zyklierung (Ladung/Entladung) mit einer Rate von C/10 zwischen 1,5-2,6 V vs. Li/Li⁺ erfolgte. Im 1. Zyklus erfolgte zur Formierung der Zelle die Entladung mit einer Rate von C/10 bis 1,0 V vs. Li/Li⁺. Das Ergebnis ist in Figur 4 dargestellt.

### Beispiel 6 - Lithium-Schwefel-Batterie mit Kathode ohne Additiv und erfindungsgemäßen Elektrolyten (Sulfolan:TTE = 1:3, v:v)

Zunächst wurde ein KB/S-Komposit (1:2, m:m) hergestellt durch Verschmelzen von Ruß (Ketjenblack EC600-JD = KB) und Schwefel (S) im Trockenschrank bei 155 °C für 12h.

Anschließend wurde KB/S (97 %) mit PTFE-Binder (3 %) bei erhöhter Temperatur vermahlen und durch einen Walzprozess zu einem Kathodenfilm trocken gepresst.

Nachfolgend erfolgte eine Lamination auf Kohlenstoff-geprimerte Aluminiumfolie. Die Schwefelbeladung der Aktivschicht betrug ca. 2,2 mg Schwefel/cm² und ihre Dichte ca. 0,6 g/cm³.

Die erhaltene Kathode ohne Additiv wurde in der gleichen Knopfzelle wie in Beispiel 2 verbaut.

Als Elektrolyt der Knopfzelle wurde ein Elektrolyt eingesetzt, der 1,0 M LiTFSI (Aldrich, 99,95 %) in
- 25 Vol.-% Sulfolan (Sigma Aldrich, 99 %); und
- 75 Vol.-% TTE (SynQuest Laboratories, Inc., 99 %);
enthält. Das Elektrolyt-zu-Schwefel-Verhältnis betrug 8 µl-Elektrolyt/mg-Schwefel.

Die Zelle wurde anschließend galvanostatisch gemessen, wobei die Zyklierung (Ladung/Entladung) mit einer Rate von C/10 zwischen 1,5-2,6 V vs. Li/Li⁺ erfolgte. Im 1. Zyklus erfolgte zur Formierung die Entladung mit einer Rate von C/10 bis 1,0 V vs. Li/Li⁺. Das Ergebnis ist in Figur 3B dargestellt.

## Patentansprüche

1. Elektrolyt für eine Alkali-Schwefel-Batterie, wobei der Elektrolyt ein Sulfon und einen fluorhaltigen Ether enthält oder daraus besteht, **dadurch gekennzeichnet, dass** das Volumenverhältnis von dem Sulfon zu dem fluorhaltigen Ether ≥ 1:4 (v:v) beträgt und das Sulfon kein fluoriertes Sulfon ist.

2. Elektrolyt gemäß einem der vorhergehenden Ansprüche, **dadurch gekennzeichnet, dass** das Volumenverhältnis von dem Sulfon zu dem fluorhaltigen Ether ≥ 1:3 (v:v), bevorzugt 1:3 (v:v) bis 1:1 (v:v), beträgt.

3. Elektrolyt gemäß einem der vorhergehenden Ansprüche, **dadurch gekennzeichnet, dass** der Elektrolyt flüssig, gelförmig oder fest ist, bevorzugt flüssig oder gelförmig ist, besonders bevorzugt flüssig ist.

4. Elektrolyt gemäß einem der vorhergehenden Ansprüche, **dadurch gekennzeichnet, dass** der fluorhaltige Ether ausgewählt ist aus der Gruppe bestehend aus 2,2,2-Trifluorethylmethylether, 2,2,2-Trifluorethyldifluormethylether, 2,2,3,3,3-Pentafluorpropylmethylether, 2,2,3,3,3-Pentafluorpropyldifluormethylether, 2,2,3,3,3-Pentafluorpropyl-1,1,2,2-tetrafluorethylether, 1,1,2,2-Tetrafluorethylmethylether, 1,1,2,2-Tetrafluorethylethylether, 1,1,2,2-Tetrafluorethylpropylether, 1,1,2,2-Tetrafluorethylbutylether, 1,1,2,2-Tetrafluorethylisobutylether, 1,1,2,2-Tetrafluorethylisopentylether, 1,1,2,2-Tetrafluorethyl-2,2,2-trifluoroethylether, 1,1,2,2-Tetrafluorethyl-2,2,3,3-tetrafluorpropylether, Hexafluorisopropylmethylether, 1,1,3,3,3-Pentafluor-2-trifluormethylpropylmethylether, 1,1,2,3,3,3-Hexafluorpropylmethylether, 1,1,2,3,3,3-Hexafluorpropylethylether, und 2,2,3,4,4,4-Hexafluorbutyldifluormethylether, bevorzugt 1,1,2,2-Tetrafluorethylpropylether, besonders bevorzugt 1,1,2,2-Tetrafluorethyl-2,2,3,3-tetrafluorpropylether.

5. Elektrolyt gemäß einem der vorhergehenden Ansprüche, **dadurch gekennzeichnet, dass** das Sulfon ausgewählt ist aus der Gruppe bestehend aus nichtzyklischen aliphatischen Sulfonen, bevorzugt Ethylmethylsulfon, Ethylvinylsulfon und/oder Butylsulfon, und zyklischen aliphatischen Sulfonen, bevorzugt Tetramethylensulfon.

6. Elektrolyt gemäß einem der vorhergehenden Ansprüche, **dadurch gekennzeichnet, dass** der Elektrolyt ein Salz ausgewählt aus der Gruppe bestehend aus LiPF₆, LiBF₄, LiCIO₄, LiSO₃CF₃, LiN(SO₂F)₂, LiN(SO₂CF₃)₂, LiN(SO₂F)(SO₂CF₃), LiN(SO₂F)(SO₂C₄F₉), LiN(SO₂CF₂CF₃)₂, LiC(SO₂CF₂CF₃)₃, LiC(SO₂CF₃)₃, Lil, LiCI, LiF, LiPF₅(SO₂CF₃), LiPF₄(SO₂CF₃)₂, und Mischungen hiervon, bevorzugt LiN(SO₂CF₃)₂, enthält, wobei das Salz bevorzugt in einer Konzentration von mehr als 0 mol/l bis maximal 2,5 mol/l enthalten ist.

7. Elektrolyt gemäß einem der vorhergehenden Ansprüche, **dadurch gekennzeichnet, dass** der Elektrolyt kein LiNO₃ enthält.

8. Alkali-Schwefel-Batterie enthaltend
a) einen Elektrolyt gemäß einem der vorhergehenden Ansprüche;
b) eine Kathode, die
i) Kohlenstoff;
ii) ein Schwefel-haltiges Kathoden-Aktivmaterial, das ausgewählt ist aus der Gruppe bestehend aus elementarer Schwefel, anorganische Schwefelverbindung, organische Schwefelverbindung, Alkalimetallsulfid, Alkalimetalloligosulfid, Alkalimetallpolysulfid und Mischungen hiervon; und
iii) optional ein Additiv zur homogenisierten Verteilung von Polysulfid innerhalb der Kathode;
enthält oder daraus besteht;
c) eine Anode, die ein Anoden-Aktivmaterial enthält oder daraus besteht, das ausgewählt ist aus der Gruppe bestehend aus Alkalimetall, Alkalimetall-Kohlenstoff-Interkalat, Metallpulver, und eine Verbindung, die zur reversiblen Oxidation und Reduktion mit einem Alkalimetallion geeignet ist;
d) einen Separator;
oder bestehend daraus.

9. Alkali-Schwefel-Batterie gemäß Anspruch 8, **dadurch gekennzeichnet, dass** die Kathode
i) 40 bis 80 Gew.-%, bevorzugt 50 bis 70 Gew.-%, besonders bevorzugt 55 bis 65 Gew.-% Schwefel; und/oder
ii) 20 bis 50 Gew.-%, bevorzugt 25 bis 45 Gew.-%, besonders bevorzugt 30 bis 40 Gew.-% Kohlenstoff; und/oder
iii) 1 bis 30 Gew.-%, bevorzugt 2 bis 20 Gew.-%, besonders bevorzugt 2,5 bis 15 Gew.-%, Additiv zur homogenisierten Verteilung von Polysulfid innerhalb der Kathode;
in Bezug auf das Gesamtgewicht der Kathode, enthält oder daraus besteht.

10. Alkali-Schwefel-Batterie gemäß einem der Ansprüche 8 oder 9, **dadurch gekennzeichnet, dass** das Additiv zur homogenisierten Verteilung von Polysulfid
i) einen Redox-Mediator für Alkali-Polysulfid, bevorzugt einen Redox-Mediator für Lithium-Polysulfid, besonders bevorzugt ein Metalloxid als Redox-Mediator für Lithium-Polysulfid, insbesondere Manganoxid, Aluminiumoxid und/oder Titanoxid, enthält oder daraus besteht; und/oder
ii) ein Polymer, das Sauerstoffatome, Stickstoffatome und/oder Halogenatome enthält, bevorzugt ein Polymer, das die Etherfunktionalität -(CH₂-CH₂-O-)ₙ mit n ≥ 1 enthält, besonders bevorzugt Polyethylenoxid, enthält oder daraus besteht.

11. Alkali-Schwefel-Batterie gemäß einem der Ansprüche 8 bis 10, **dadurch gekennzeichnet, dass** die Kathode einen Binder enthält, wobei der Binder
i) ausgewählt ist aus der Gruppe bestehend aus Styrol-Butadien-Kautschuk, Polytetrafluorethylen, Gelatine, Polyacrylsäure, Carboxymethylcellulose, Polyvinylpyrrolidon und Polyvinylidenfluorid, besonders bevorzugt Styrol-Butadien-Kautschuk und Polytetrafluorethylen; und/oder
ii) in einer Konzentration von 1 bis 10 Gew.-%, bevorzugt 1,5 bis 8 Gew.-%, besonders bevorzugt 2 bis 6 Gew.-%, in Bezug auf das Gesamtgewicht der Kathode, vorliegt.

12. Alkali-Schwefel-Batterie gemäß einem der Ansprüche 8 bis 11, **dadurch gekennzeichnet, dass** die Kathode
i) amorphen Kohlenstoff, Kohlenstoffnanoröhren und/oder Kohlenstoffnanofasern enthält, wobei der amorphe Kohlenstoff bevorzugt Ruß ist; und/oder
ii) amorphen Kohlenstoff und Kohlenstoffnanofasern enthält, wobei das Gewichtsverhältnis von amorphen Kohlenstoff zu Kohlenstoffnanofasern bevorzugt von 5:1 (w:w) bis 20:1 (w:w), bevorzugt von 8:1 (w:w) bis 16:1 (w:w), besonders bevorzugt von 10:1 (w:w) bis 12:1 (w:w), beträgt, wobei der amorphe Kohlenstoff insbesondere Poren aufweist, bevorzugt Mikroporen und Mesoporen, besonders bevorzugt Mikroporen mit einem Durchmesser von > 0 bis 2 nm und Mesoporen mit einem Durchmesser von 2 bis 50 nm.

13. Alkali-Schwefel-Batterie gemäß einem der Ansprüche 8 bis 12, **dadurch gekennzeichnet, dass** das Schwefel-haltige Kathoden-Aktivmaterial homogen in dem Kohlenstoff der Kathode verteilt ist, bevorzugt in Poren des Kohlenstoffs vorliegt, besonders bevorzugt in Poren des amorphen Kohlenstoffs vorliegt, insbesondere in den Poren eingeschmolzen vorliegt, und/oder dass der Separator Polypropylen enthält oder daraus besteht.

14. Verwendung einer Zusammensetzung enthaltend oder bestehend aus 1,1,2,2-Tetrafluorethyl-2,2,3,3-Tetrafluorpropylether und Tetramethylensulfon als Elektrolyt in Alkali-Schwefel-Batterien, bevorzugt Lithium-Schwefel-Batterien.

15. Verwendung einer Zusammensetzung enthaltend oder bestehend aus Polyethylenoxid und Styrol-Butadien-Kautschuk, bevorzugt Polyethylenoxid, Styrol-Butadien-Kautschuk und Polyvinylpyrrolidon, als Binder für Kathoden in Alkali-Schwefel-Batterien, bevorzugt Lithium-Schwefel-Batterien.

## Claims

1. Electrolyte for an alkali-sulphur battery, the electrolyte comprising a sulphone and a fluorine-containing ether or consisting thereof, **characterised in that** the volume ratio of the sulphone to the fluorine-containing ether is ≥ 1 : 4 (v : v) and that the sulphone is not a fluorinated sulphone.

2. Electrolyte according to one of the preceding claims, **characterised in that** the volume ratio of the sulphone to the fluorine-containing ether is ≥ 1 : 3 (v : v), preferably 1 : 3 (v : v) to 1 : 1 (v : v).

3. Electrolyte according to one of the preceding claims, **characterised in that** the electrolyte is liquid, gel-like or solid, preferably liquid or gel-like, particularly preferably liquid.

4. Electrolyte according to one of the preceding claims, **characterised in that** the fluorine-containing ether is selected from the group consisting of 2,2,2-trifluoroethylmethylether, 2,2,2-trifluoroethyldifluoromethylether, 2,2,3,3,3-pentafluoropropylmethylether, 2,2,3,3,3-pentafluoropropyldifluoromethylether, 2,2,3,3,3-pentafluoropropyl-1,1,2,2-tetrafluoroethylether, 1,1,2,2-tetrafluoroethylmethylether, 1,1,2,2-tetrafluoroethylethylether, 1,1,2,2-tetrafluoroethylpropylether, 1,1,2,2-tetrafluoroethylbutylether, 1,1,2,2-tetrafluoroethylisobutylether, 1,1,2,2-tetrafluoroethylisopentylether, 1,1,2,2-tetrafluoroethyl-2,2,2-trifluoroethylether, 1,1,2,2-tetrafluoroethyl-2,2,3,3-tetrafluoropropylether, hexafluoroisopropylmethylether, 1,1,3,3,3-pentafluoro-2-trifluoromethylpropylmethylether, 1,1,2,3,3,3-hexafluoropropylmethylether, 1,1,2,3,3,3-hexafluoropropylethylether, and 2,2,3,4,4,4-hexafluorobutyldifluoromethylether, preferably 1,1,2,2-tetrafluoroethylpropylether, particularly preferably 1,1,2,2-tetrafluoroethyl-2,2,3,3-tetrafluoropropylether.

5. Electrolyte according to one of the preceding claims, **characterised in that** the sulphone is selected from the group consisting of non-cyclic aliphatic sulphones, preferably ethylmethylsulphone, ethylvinylsuphone and/or butylsulphone, and cyclic aliphatic sulphones, preferably tetramethylene sulphone.

6. Electrolyte according to one of the preceding claims, **characterised in that** the electrolyte is a salt selected from the group consisting of LiPF₆, LiBF₄, LiClO₄, LiSO₃CF₃, LiN(SO₂F)₂, LiN(SO₂CF₃)₂, LiN(SO₂F)(SO₂CF₃), LiN(SO₂F)(SO₂C₄F₉), LiN(SO₂CF₂CF₃)₂, LiC(SO₂CF₂CF₃)₃, LiC(SO₂CF₃)₃, Lil, LiCI, LiF, LiPF₅(SO₂CF₃), LiPF₄(SO₂CF₃)₂, and mixtures hereof, preferably comprises LiN(SO₂CF₃)₂, the salt being preferably contained in a concentration of more than 0 mol/l up to at most 2.5 mol/l.

7. Electrolyte according to one of the preceding claims, **characterised in that** the electrolyte comprises no LiNO₃.

8. Alkali-sulphur battery comprising
a) an electrolyte according to one of the preceding claims;
b) a cathode, which comprises
i) carbon;
ii) a sulphur-containing cathode active material which is selected from the group consisting of elementary sulphur, inorganic sulphur compound, organic sulphur compound, alkali metal sulphide, alkali metal oligosulphide, alkali metal polysulphide and mixtures hereof; and
iii) optionally an additive for homogenised distribution of polysulphide within the cathode;
or consists thereof;
c) an anode which comprises an anode active material or consists thereof, which is selected from the group consisting of alkali metal, alkali metal-carbon intercalate, metal powder and a compound which is suitable for reversible oxidation and reduction with an alkali metal ion;
d) a separator;
or consisting thereof.

9. Alkali-sulphur battery according to claim 8, **characterised in that** the cathode comprises
i) 40 to 80% by weight, preferably 50 to 70% by weight, particularly preferably 55 to 65% by weight, of sulphur; and/or
ii) 20 to 50% by weight, preferably 25 to 45% by weight, particularly preferably 30 to 40% by weight, of carbon; and/or
iii) 1 to 30% by weight, preferably 2 to 20% by weight, particularly preferably 2.5 to 15% by weight, of additive for homogenised distribution of polysulphide within the cathode;
relative to the total weight of the cathode, or consists thereof.

10. Alkali-sulphur battery according to one of the claims 8 or 9, **characterised in that** the additive for homogenised distribution of polysulphide
i) comprises a redox mediator for alkali polysulphide, preferably a redox mediator for lithium polysulphide, particularly preferably a metal oxide as redox mediator for lithium polysulphide, in particular manganese oxide, aluminium oxide and/or titanium oxide, or consists thereof; and/or
ii) comprises a polymer which comprises oxygen atoms, nitrogen atoms and/or halogen atoms, preferably a polymer which comprises the ether functionality -(CH₂-CH₂-O-)ₙ with n ≥ 1, particularly preferably polyethylene oxide, or consists thereof.

11. Alkali-sulphur battery according to one of the claims 8 to 10, **characterised in that** the cathode comprises a binder, wherein the binder
i) is selected preferably from the group consisting of styrene-butadiene rubber, polytetrafluoroethylene, gelatines, polyacrylic acid, carboxymethyl cellulose, polyvinylpyrrolidone and polyvinylidene fluoride, particularly preferably styrene-butadiene rubber and polytetrafluoroethylene; and/or
ii) is present in a concentration of 1 to 10% by weight, preferably 1.5 to 8% by weight, particularly preferably 2 to 6% by weight, relative to the total weight of the cathode.

12. Alkali-sulphur battery according to one of the claims 8 to 11, **characterised in that** the cathode
i) comprises amorphous carbon, carbon nanotubes and/or carbon nanofibres, the amorphous carbon being preferably carbon black; and/or
ii) comprises amorphous carbon and carbon nanofibres, the weight ratio of amorphous carbon to carbon nanofibres being preferably from 5 : 1 (w : w) to 20 : 1 (w : w), preferably from 8 : 1 (w : w) to 16 : 1 (w : w), particularly preferably from 10 : 1 (w : w) to 12 : 1 (w : w), wherein the amorphous carbon in particular has pores, preferably micropores and mesopores, particularly preferably micropores with a diameter of > 0 to 2 nm and mesopores with a diameter of 2 to 50 nm.

13. Alkali-sulphur battery according to one of the claims 8 to 12, **characterised in that** the sulphur-containing cathode active material is distributed homogeneously in the carbon of the cathode, preferably in pores of the carbon, particularly preferably in pores of the amorphous carbon, in particular is present melted in the pores, and/or that the separator comprises polypropylene or consists thereof.

14. Use of a composition comprising or consisting 1,1,2,2-tetrafluoroethyl-2,2,3,3-tetrafluoropropylether and tetramethylene sulphone as electrolyte in alkali-sulphur batteries, preferably lithium-sulphur batteries.

15. Use of a composition comprising or consisting of polyethylene oxide and styrene-butadiene rubber, preferably polyethylene oxide, styrene-butadiene rubber and polyvinylpyrrolidone, as binder for cathodes in alkali-sulphur batteries, preferably lithium-sulphur batteries.

## Revendications

1. Electrolyte pour une batterie métal alcalin-soufre, l'électrolyte contenant une sulfone et un éther fluoré ou en étant constitué, **caractérisé en ce que** le rapport en volume de la sulfone à l'éther fluoré est ≥ 1:4 (v:v), et la sulfone n'est pas une sulfone fluorée.

2. Electrolyte selon l'une des revendications précédentes, **caractérisé en ce que** le rapport en volume de la sulfone à l'éther fluoré est ≥ 1:3 (v:v), de préférence de 1:3 (v:v) à 1:1 (v:v).

3. Electrolyte selon l'une des revendications précédentes, **caractérisé en ce que** l'électrolyte est liquide, en gel ou solide, de préférence liquide ou en gel, d'une manière particulièrement préférée liquide.

4. Electrolyte selon l'une des revendications précédentes, **caractérisé en ce que** l'éther fluoré est choisi dans le groupe consistant en le 2,2,2-trifluoroéthylméthyléther, le 2,2,2-trifluoroéthyldifluorométhyléther, le 2,2,3,3,3-pentafluoropropylméthyléther, le 2,2,3,3,3-pentafluoropropyldifluorométhyléther, le 2,2,3,3,3-pentafluoropropyl-1,1,2,2-tétrafluoroéthyléther, le 1,1,2,2-tétrafluoroéthylméthyléther, le 1,1,2,2-tétrafluoroéthyléthyléther, le 1,1,2,2-tétrafluoroéthylpropyléther, le 1,1,2,2-tétrafluoroéthylbutyléther, le 1,1,2,2-tétrafluoroéthylisobutyléther, le 1,1,2,2-tétrafluoroéthylisopentyléther, le 1,1,2,2-tétrafluoroéthyl-2,2,2-trifluoroéthyléther, le 1,1,2,2-tétrafluoroéthyl-2,2,3,3-tétrafluoropropyléther, l'hexafluoroisopropylméthyléther, le 1,1,3,3,3-pentafluoro-2-trifluorométhylpropylméthyléther, le 1,1,2,3,3,3-hexafluoropropyléthyléther, et le 2,2,3,4,4,4-hexafluorobutyldifluorométhyléther, de préférence le 1,1,2,2-tétrafluoroéthylpropyléther, d'une manière particulièrement préférée le 1,1,2,2-tétrafluoroéthyl-2,2,3,3-tétrafluoropropyléther.

5. Electrolyte selon l'une des revendications précédentes, **caractérisé en ce que** la sulfone est choisie dans le groupe consistant en les sulfones aliphatiques acycliques, de préférence l'éthylméthylsulfone, l'éthylvinylsulfone et/ou la butylsulfone, et les sulfones aliphatiques cycliques, de préférence la tétraméthylènesulfone.

6. Electrolyte selon l'une des revendications précédentes, **caractérisé en ce que** l'électrolyte est un sel choisi dans le groupe consistant en LiPF₆, LiBF₄, LiClO₄, LiSO₃CF₃, LiN(SO₂F)₂, LiN(SO₂CF₃)₂, LiN(SO₂F)(SO₂CF₃), LiN(SO₂F)(SO₂C₄F₉), LiN(SO₂CF₂CF₃)₂, LiC(SO₂CF₂CF₃)₃, LiC(SO₂CF₃)₃, Lil, LiCl, LiF, LiPF₅(SO₂CF₃), LiPF₄(SO₂CF₃)₂, et les mélanges de ceux-ci, de préférence LiN(SO₂CF₃)₂, le sel étant présent de préférence à une concentration supérieure à 0 mol/l et allant jusqu'à un maximum de 2,5 mol/l.

7. Electrolyte selon l'une des revendications précédentes, **caractérisé en ce que** l'électrolyte ne contient pas de LiNO₃.

8. Batterie métal alcalin-soufre, contenant, ou en étant constituée
a) un électrolyte selon l'une des revendications précédentes ;
b) une cathode, qui contient, ou en est constituée
i) du carbone ;
ii) une matière active de cathode contenant du soufre, qui est choisie dans le groupe consistant en le soufre élémentaire, un composé inorganique du soufre, un composé organique du soufre, un sulfure de métal alcalin, un oligosulfure de métal alcalin, un polysulfure de métal alcalin et les mélanges de ceux-ci ; et
iii) optionnellement un additif pour la répartition homogénéisée du polysulfure à l'intérieur de la cathode ;
c) une anode, qui contient une matière active d'anode ou en est constituée, qui est choisie dans le groupe consistant en un métal alcalin, un produit d'intercalation d'un métal alcalin sur du carbone, une poudre métallique et un composé qui convient à l'oxydation et à la réduction réversible avec un ion d'un métal alcalin ;
d) un séparateur.

9. Batterie métal alcalin-soufre selon la revendication 8, **caractérisée en ce que** la cathode contient, ou en est constituée
i) 40 à 80 % en poids, de préférence 50 à 70 % en poids, d'une manière particulièrement préférée 55 à 65 % en poids de soufre ; et/ou
ii) 20 à 50 % en poids, de préférence 25 à 45 % en poids, d'une manière particulièrement préférée 30 à 40 % en poids de carbone ; et/ou
iii) 1 à 30 % en poids, de préférence 2 à 20 % en poids, d'une manière particulièrement préférée 2,5 à 15 % en poids d'un additif pour la répartition homogénéisée du polysulfure à l'intérieur de la cathode ;
par rapport au poids total de la cathode.

10. Batterie métal alcalin-soufre selon l'une des revendications 8 ou 9, **caractérisée en ce que** l'additif pour la répartition homogénéisée du polysulfure
i) contient, ou en est constitué, un médiateur rédox pour le polysulfure d'un métal alcalin, de préférence un médiateur rédox pour le polysulfure de lithium, d'une manière particulièrement préférée un oxyde métallique en tant que médiateur rédox pour le polysulfure de lithium, en particulier l'oxyde de manganèse, l'oxyde d'aluminium et/ou l'oxyde de titane ; et/ou
ii) contient, ou en est constitué, un polymère, qui contient des atomes d'oxygène, des atomes d'azote et/ou des atomes d'halogène, de préférence un polymère qui contient la fonctionnalité éther-(CH₂-CH₂-O)ₙ, avec n ≥ 1, d'une manière particulièrement préférée le poly(oxyde d'éthylène).

11. Batterie métal alcalin-soufre selon l'une des revendications 8 à 10, **caractérisée en ce que** la cathode contient un liant, le liant
i) étant choisi dans le groupe consistant en le caoutchouc styrène-butadiène, le polytétrafluoréthylène, la gélatine, le poly(acide acrylique), la carboxyméthylcellulose, la polyvinylpyrrolidone et le poly(fluorure de vinylidène), d'une manière particulièrement préférée le caoutchouc styrène-butadiène et le polytétrafluoréthylène ; et/ou
ii) est présent à une concentration de 1 à 10 % en poids, de préférence de 1,5 à 8 % en poids, d'une manière particulièrement préférée de 2 à 6 % en poids, par rapport au poids total de la cathode.

12. Batterie métal alcalin-soufre selon l'une des revendications 8 à 11, **caractérisée en ce que** la cathode
i) contient du carbone amorphe, des nanotubes de carbone et/ou des nanofibres de carbone, le carbone amorphe étant de préférence le noir de carbone ; et/ou
ii) contient du carbone amorphe et des nanofibres de carbone, le rapport en poids du carbone amorphe aux nanofibres de carbone étant de préférence de 5:1 (p:p) à 20:1 (p:p), de préférence de 8:1 (p:p) à 16:1 (p:p), d'une manière particulièrement préférée de 10:1 (p:p) à 12:1 (p:p), le carbone amorphe présentant de préférence des pores, de préférence des micropores et des mésopores, d'une manière particulièrement préférée des micropores ayant un diamètre > 0 jusqu'à 2 nm et des mésopores ayant un diamètre de 2 à 50 nm.

13. Batterie métal alcalin-soufre selon l'une des revendications 8 à 12, **caractérisée en ce que** la matière active de cathode contenant du soufre est répartie d'une manière homogène dans le carbone de la cathode, est présente de préférence dans des pores du carbone, d'une manière particulièrement préférée est présente dans des pores du carbone amorphe, et en particulier est présente dans les pores sous forme fondue, et/ou **en ce que** le séparateur contient du polypropylène ou en est constitué.

14. Utilisation d'une composition contenant, ou en étant constituée, du 1,1,2,2-tétrafluoroéthyl-2,2,3,3-tétrafluoropropyléther et de la tétraméthylènesulfone en tant qu'électrolyte dans des batteries métal alcalin-soufre, de préférence des batteries lithium-soufre.

15. Utilisation d'une composition contenant, ou en étant constituée, du poly(oxyde d'éthylène) et un caoutchouc styrène-butadiène, de préférence du poly(oxyde d'éthylène), un caoutchouc styrène-butadiène et de la polyvinylpyrrolidone, en tant que liant pour des cathodes dans des batteries métal alcalin-soufre, de préférence dans des batteries lithium-soufre.
